# EUROPÄISCHE PATENTSCHRIFT

(11) **EP 3 055 184 B1**
(45) Veröffentlichungstag und Bekanntmachung des Hinweises auf die Patenterteilung: **19.07.2017**
(21) Anmeldenummer: 14743997.0
(22) Anmeldetag: 26.07.2014
(51) Int. Cl.: B62D 1/184

(54) **LENKSÄULENANORDNUNG FÜR EINEN KRAFTWAGEN**
STEERING COLUMN ASSEMBLY FOR A MOTOR VEHICLE
SYSTÈME DE COLONNE DE DIRECTION DESTINÉ À UN VÉHICULE AUTOMOBILE

(30) Priorität: 07.10.2013 DE 102013016534
(43) Veröffentlichungstag der Anmeldung: 17.08.2016
(73) Patentinhaber: Daimler AG, 70327 Stuttgart (DE)
(72) Erfinder: HANSEN, Detlef, 22869 Schenefeld (DE); HARMS, Torsten, 21129 Hamburg (DE); KITTLER, Holger, 22761 Hamburg (DE); MAAK, Jan, 21217 Seevetal (DE); ROOT, Paul, 21073 Hamburg (DE)
(74) Vertreter: JENSEN & SON
(86) Internationale Anmeldenummer: PCT/EP2014/002041
(87) Internationale Veröffentlichungsnummer: WO 2015/051862

(56) Entgegenhaltungen:
- DE-A1-102010 051 880

## Beschreibung

Die Erfindung betrifft eine Lenksäulenanordnung für einen Kraftwagen gemäß dem Oberbegriff von Patentanspruch 1.

Eine derartige Lenksäulenanordnung ist beispielsweise bereits aus der
DE 10 2010 051 880 A1 als bekannt zu entnehmen. Die dortige Lenksäulenanordnung umfasst eine Konsole sowie eine unter Vermittlung eines Zwischenteils in Form eines Mantelrohrkastens zwischen jeweiligen Konsolenschenkeln gelagerte Lenksäule, die an der Konsole mittels einer Klemmeinrichtung lösbar festgelegt ist. Diese Klemmeinrichtung umfasst wenigstens ein mittels eines Stützelements in Form eines Klemmblechs an der Konsole gehaltenes Keilpaar mit jeweiligen Klemmkeilen. Auf der der Klemmeinrichtung abgewandten Seite wird dabei die Klemmkraft der Klemmeinrichtung mittels einer Spanneinrichtung erzeugt, welche über einen Klemmbolzen mit der Klemmeinrichtung verbunden ist.

Die bekannte Klemmeinrichtung erfüllt die Anforderung, eine hohe Steifigkeit für die Lenksäule in Längsrichtung und gleichzeitig eine hohe Klemmkraftübertragung zu gewährleisten. Zu hohen Klemmkraftübertragung werden dabei zwischen den jeweiligen Klemmkeilen bzw. zwischen im konsolennahen Klemmkeil und der Konsole selbst jeweilige Reibfolien angeordnet. Außerdem sind jeweilige Klemmfedern vorgesehen, um eine definierte Positionierung der Klemmkeile zu gewährleisten. Dabei ist das Klemmblech in Querrichtung der Lenksäulenanordnung biegeweich und in Längsrichtung der Lenksäule schubsteif ausgebildet. Bei einer unfallbedingten Axialverschiebung des Mantelrohrs der Lenksäule ergibt sich somit eine erhöhte Haltekraft, so dass eine übermäßige Verlagerung der Lenksäule vermieden werden kann. In diesem Zusammenhang ist es wichtig, dass das Klemmblech entsprechend schubsteif ausgebildet ist. Somit kann sich das Klemmteil nicht in Längsrichtung der Lenksäulenanordnung bewegen, sondern ist vielmehr steif gestaltet. Durch die biegeweiche Ausgestaltung in Querrichtung wird hingegen eine günstige Übertragung der Klemmkräfte innerhalb der Klemmeinrichtung ermöglicht. Insgesamt ist somit auf einfache Weise der Widerspruch zwischen einer gleichzeitig hohen Steifigkeit und Eigenfrequenz der Lenksäule und andererseits einer guten Klemmkraftübertragung gewährleistet.

Allerdings ist die vorliegende Klemmeinrichtung relativ aufwändig gestaltet und entsprechend ungünstig zu montieren.

Aufgabe der vorliegenden Erfindung ist es daher, eine Lenksäulenanordnung der eingangs genannten Art zu schaffen, welche einfacher aufgebaut ist und leichter zu montieren ist.

Diese Aufgabe wird erfindungsgemäß durch eine Lenksäulenanordnung mit den Merkmalen des Patentanspruchs 1 gelöst. Vorteilhafte Ausgestaltungen mit zweckmäßigen und nicht-trivialen Weiterbildungen der Erfindung sind in den übrigen Patentansprüchen angegeben.

Um eine Lenksäulenanordnung der eingangs genannten Art zu schaffen, welche einfacher aufgebaut und leichter montierbar ist, ist es erfindungsgemäß vorgesehen, dass die Klemmkeile unmittelbar aneinander anliegen und das Keilpaar auf seiner dem Zwischenteil, insbesondere dem Mantelrohrkasten, abgewandten Seite mittels des Stützelements abgestützt ist.. Im Unterschied zum Stand der Technik muss somit die Klemmkraft zwischen den beiden Klemmkeilen nicht über das Stützelement übertragen werden, sondern vielmehr liegen die Klemmkeile unmittelbar aneinander an. Unter diesem unmittelbaren Anliegen ist also demzufolge zu verstehen, dass erfindungsgemäß das Stützelement nicht mehr zwischen den beiden Klemmkeilen angeordnet ist, wie dies bislang beim Stand der Technik gemäß der DE 10 2010 051 880 A1 bekannt war. Gleichwohl ist es jedoch denkbar, falls eine besondere Erhöhung der Klemmkraft erforderlich ist, zwischen den jeweiligen Klemmkeilen entsprechende, reibungserhöhende Mittel wie Reibfolien oder dergleichen vorzusehen.

Einhergehend mit der unmittelbaren Anlage der beiden Klemmkeile aneinander ist das erfindungsgemäße Stützelement auf der dem zugeordnetem Konsolenschenkel abgewandten Seite angeordnet, wobei es das Keilpaar entsprechend abstützt. Hierdurch kann das Stützelement weitaus einfacher gestaltet werden als beim bekannten Stand der Technik, was eine einfache Bauweise der gesamten Lenksäulenanordnung bzw. der Klemmeinrichtung ermöglicht.

In vorteilhafter Ausgestaltung der Erfindung ist dabei wenigstens ein Federelement vorgesehen, welches sich mit einem Ende am einen Klemmteil und mit dem anderen Ende am anderen Klemmkeil abstützt und mittels welchem das Keilpaar in einer Ausnahme des zugeordneten Konsolenschenkels fixiert ist. Durch die Kombination der beiden Keilelemente mit dem Federelement ergibt sich somit eine äußerst einfache Anordnung, welche in einfacher Weise in der zugehörigen Aufnahme der Konsole befestigt werden kann.

Weiterhin hat es sich als vorteilhaft gezeigt, wenn zwischen dem konsolennahen Klemmkeil und dem zugeordneten Konsolenschenkel ein reibungserhöhendes Mittel, insbesondere eine Reibfolie, vorgesehen ist. Hierdurch lässt sich eine besonders hohe Klemmkraft zwischen dem Keilpaar und der Konsole erreichen.

Weiterhin vorteilhaft ist es, wenn die beiden Klemmkeile, die Reibfolie und das Federelement zu einer vormontierbaren Baueinheit zusammengefasst sind. Somit lässt sich die Montage der Lenksäulenanordnung weiter vereinfachen.

Diese Baueinheit kann auf einfache Weise in die hierfür vorgesehene Aufnahme der Konsole eingesetzt werden, wenn die beiden Klemmteile mittels des Federelements in Fahrzeuglängsrichtung vorgespannt sind.

Eine weitere vorteilhafte Ausführungsform sieht vor, dass das Stützelement eine zumindest im Wesentlichen ebene Erstreckung aufweist. Hierdurch ergibt sich eine deutlich einfachere Ausgestaltung als im oben beschriebenen Stand der Technik.

Dabei hat es sich im weiteren Zusammenhang als vorteilhaft gezeigt, wenn das Stützelement als Stützblech ausgebildet ist. Ein derartiges Stützblech ist einfach und kostengünstig herstellbar und leicht an der Konsole montierbar.

Schließlich hat es sich als vorteilhaft gezeigt, wenn die beiden Klemmkeile formidentisch bzw. als Gleichteile ausgebildet sind. Hierdurch lässt sich der Herstellungsprozess der Klemmteile vereinfachen und kostengünstiger gestalten.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

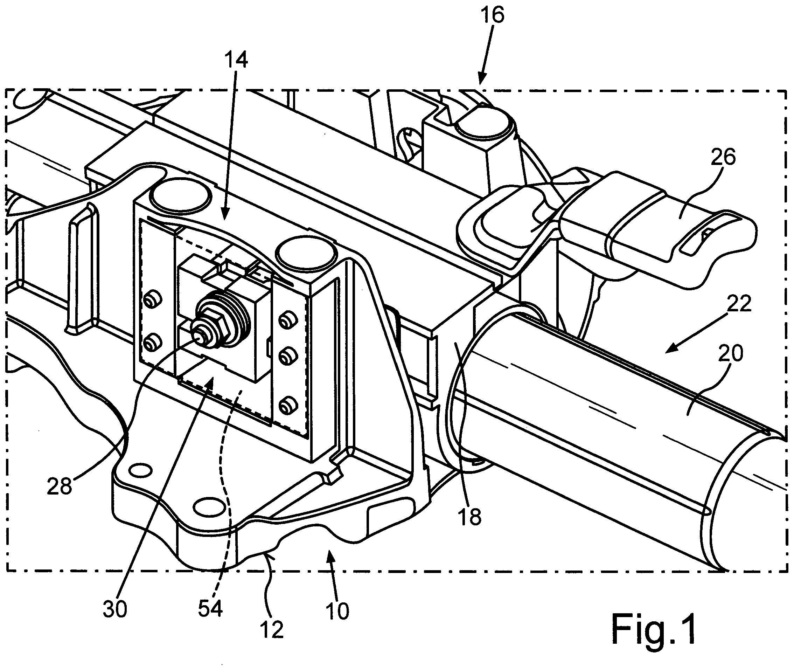

- Fig. 1: eine ausschnittsweise Perspektivansicht von schräg vorne unten auf eine Lenksäulenanordnung für einen Kraftwagen, mit einer Konsole und mit einer unter Vermittlung eines Mantelrohrkastens zwischen jeweiligen Konsolenschenkeln gelagerten Lenksäule, die an der Konsole mittels einer Klemmeinrichtung lösbar festgelegt ist, welche wenigstens ein mittels eines Stützelements an der Konsole gehaltenes Keil, mit jeweiligen Klemmkeilen umfasst, wobei die Klemmkeile unmittelbar aneinander anliegen und das Keilpaar auf der dem zugeordneten Konsolenschenkel abgewandten Seite mittels des Stützelements in Form des Stützblechs abgestützt ist;

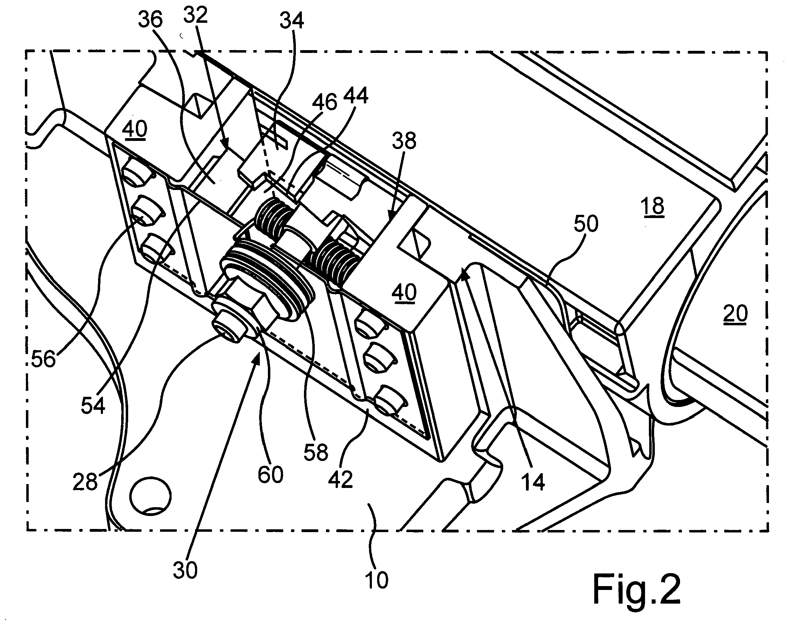

- Fig. 2: eine ausschnittsweise und vergrößerte Perspektivansicht von schräg unten auf denjenigen Konsolenschenkel der Lenksäule, an welchem die Klemmeinrichtung mit den Klemmkeilen unter Vermittlung des Stützblechs abgestützt ist; und in

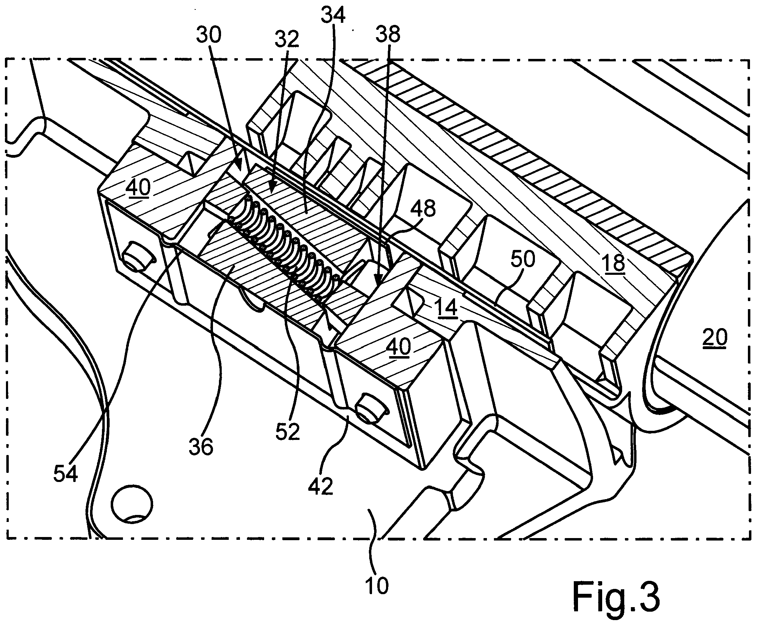

- Fig. 3: eine weitere, ausschnittsweise vergrößerte Perspektivansicht von schräg unten auf die am zugehörigen Konsolenschenkel der Lenkkonsole angeordneten Klemmeinrichtung, welche in einer Schnittdarstellung gezeigt ist, wodurch das Keilpaar mit den Klemmkeilen und einem zugehörigen Federelement erkennbar sind.

In Fig. 1 ist in einer ausschnittsweisen Perspektivansicht von schräg vorne unten eine Lenksäulenanordnung für einen Personenkraftwagen dargestellt. Dabei ist zunächst eine Lenkkonsole 10 erkennbar, welche mit einer Oberseite 12 rohbauseitig am Kraftwagen festgelegt werden kann. Die Lenkkonsole 10 umfasst dabei zwei senkrecht nach unten abstehende Konsolenschenkel 14, 16, zwischen welchen sich ein Zwischenteil in Form eines Mantelrohrkastens 18 erstreckt. Dieser Mantelrohrkasten 18 nimmt mit einer zylindrischen Aufnahme ein Mantelrohr 20 einer Lenksäule 22 auf, welche außerdem eine innerhalb des Mantelrohrs 20 aufgenommene Lenkspindel umfasst. Diese ist jedoch in den Figuren nicht erkennbar. Unter Vermittlung des Mantelrohrkastens 18 ist das Mantelrohr 20 bzw. die Lenksäule 22 insgesamt an der Konsole 10 gelagert, und zwar durch eine Klemmeinrichtung 30. Im vorliegenden Fall wird diese Klemmeinrichtung 30 manuell - mechanisch mittels einer Handhabe 26 auf im Weiteren noch näher beschriebene Weise betätigt, sodass nach Öffnen der Klemmeinrichtung 30 die Lenksäule 22 in ihrer Höheneinstellung und/oder Längseinstellung variiert - und in der eingestellten Position - durch Feststellen der Klemmeinrichtung 30 wieder ffixiert werden kann.

Durch Betätigen der Handhabe 26 werden dabei beispielsweise jeweilige Spannscheiben um eine durch einen Klemmbolzen 28 gebildete Achse verdreht, was zu einer in Axialrichtung des Klemmbolzens 28 wirkenden Klemmkraft führt. Mit anderen Worten kann durch Betätigen der Handhabe 26 und unter Vermittlung des Klemmbolzens 28 auf die Klemmeinrichtung 30 eine Axialkraft ausgeübt werden, sodass das Mantelrohr 20 mittels des Mantelrohrkastens 18 klemmend zwischen den beiden Konsolenschenkeln 14, 16 der Lenkkonsole 10 fixiert wird. Der Aufbau der Spannscheiben der Spanneinrichtung, welche vorliegend nicht erkennbar ist, entspricht dabei beispielsweise derjenigen gemäß der DE 10 2010 051 880 A1.

In Zusammenschau mit den Fig. 2 und 3, welche in einer jeweils ausschnittsweise vergrößerten Perspektivansicht die Lenksäulenanordnung gemäß Fig. 1 im Bereich des einen Konsolenschenkels 14 zeigen, soll nun insbesondere die Funktionsweise und der Aufbau der Klemmeinrichtung 30 erläutert werden. Fig. 2 zeigt hierbei die Klemmeinrichtung 30 im Bereich des Konsolenschenkels 14 im Einbauzustand, und Fig. 3 zeigt die Klemmeinrichtung 30 in einer Schnittansicht entlang einer quer zum Konsolenschenkel 14 verlaufenden Schnittebene.

Wie nun aus Fig. 2 und Fig. 3 erkennbar ist, umfasst die Klemmeinrichtung 30 ein Keilpaar 32 mit den Klemmkeilen 34 und 36, welche - wie dies aus Fig. 2 erkennbar ist - durch den Klemmbolzen 28 durchsetzt sind. Das Keilpaar 32 ist dabei innerhalb einer Aufnahme 38 des zugeordneten Konsolenschenkels 14 aufgenommen, welche im Wesentlichen prismatisch bzw. kastenartig ausgebildet und durch jeweilige Leisten 40 nach vorne und hinten hin in Fahrzeuglängsrichtung (x-Richtung) begrenzt ist. Die Leisten 40 sind vorliegend als separate Teile ausgebildet, welche an der Konsole 10 fixiert sind. Natürlich wäre es auch denkbar, die Leisten 40 einstückig mit der Konsole 10 auszubilden. Dabei ist weiterhin erkennbar, dass die beiden Leisten 40 auf der Oberseite über eine Leiste 42 miteinander verbunden sind. Somit ergibt sich eine im Wesentlichen U-förmige Grundkontur der Aufnahme 38.

Wie nun insbesondere in der Schnittansicht gemäß Fig. 3 erkennbar ist, sind die beiden Klemmkeile 34, 36 des Keilpaars 32 formidentisch ausgebildet und über jeweilige Klemmflächen 44, 46 unmittelbar aneinander anliegend angeordnet. Der dem Mantelrohrkasten 18 zugewandte Klemmkeil 34 stützt sich dabei unter Vermittlung eines reibungserhöhenden Mittels, vorliegend in Form einer Reibfolie 48, am zugeordneten Wandbereich 50 des Mantelrohrkastens 18 ab. Im vorliegenden Fall wird dieser Wandbereich 50 durch ein separates Blechelement des Mantelrohrkastens 18 gebildet.

Weiterhin ist aus Fig. 3 erkennbar, dass die beiden Klemmkeile 34, 36 mittels eines Federelements 52 in Form einer Schraubenfeder gegenseitig abgestützt sind. Hierzu stützt sich das Federelement 52 mit einem Ende am einen Klemmkeil 34 und mit dem anderen Ende am anderen Klemmkeil 36 ab. Durch das Federelement 52 werden somit die beiden Klemmkeile 34, 36 innerhalb der Aufnahme 38 des Konsolenschenkels 14 in Fahrzeuglängsrichtung (x-Richtung) bzw. in Erstreckungsrichtung der Lenksäule 22 verspannt bzw. an der Konsole 10 fixiert.

In Fahrzeugquerrichtung (y-Richtung) erfolgt die Fixierung bzw. Abstützung der Klemmkeile 34, 36 mittels eines Stützelements 54, welches vorliegend als Stützblech ausgebildet ist. Durch dieses Stützblech 54 auf der dem zugehörigen Konsolenschenkel 14 bzw. dem Mantelrohr 20 und dem Mantelrohrkasten 24 abgewandten Seite wird somit das Keilpaar 32 mit den Klemmkeilen 34, 36 entsprechend abgestützt und innerhalb der Aufnahme 38 gehalten. Insbesondere aus Fig. 2 ist dabei erkennbar, dass das Stützblech 54 eine zumindest im Wesentlichen ebene Erstreckung aufweist und demzufolge äußerst einfach herstellbar ist. Vorliegend ist es über eine Mehrzahl von Steckbolzen 56 an den jeweiligen Leisten 40 fixiert. Außerdem ist aus Fig. 2 erkennbar, dass das Stützblech 54 durch den Klemmbolzen 28 durchsetzt ist. Außenseitig des Stützblechs 54 sind auf den Klemmbolzen 28 eine Scheibe 58 und eine Mutter 60 aufgebracht.

Wird nun mittels der vorhin erläuterten Spanneinrichtung durch Betätigen der Handhabe 28 eine Axialkraft auf den Klemmbolzen 28 aufgebracht und dieser entsprechend in Axialrichtung bewegt, so wird demzufolge unter Vermittlung der Mutter 60 und der Scheibe 58 die Klemmeinrichtung 24 mit einer Klemmkraft beaufschlagt - oder nicht. Durch Lösen der Klemmeinrichtung 30 ist es demzufolge möglich, das Mantelrohr 20 bzw. die Lenksäule 22 relativ zur Konsole 10 zu bewegen, wohingegen bei fixierter Klemmeinrichtung 24 eine Festlegung der Lenksäule 22 bzw. des Mantelrohrs 20 relativ zur Konsole 10 gegeben ist.

Die vorliegende Klemmeinrichtung 24 zeichnet sich insbesondere dadurch aus, dass die beiden Klemmteile 34, 36 unmittelbar aneinander anliegen, also dass das Stützblech 54 - im Unterschied zum Stand der Technik gemäß DE 10 2010 051 880 A1 - nicht zwischen den beiden Klemmkeilen 34, 36 angeordnet ist, sondern vielmehr außenseitig des Keilpaars 32. Des Weiteren zeichnet sich die Klemmeinrichtung 30 dadurch aus, dass vorliegend vorzugsweise lediglich ein Federelement 52 vorgesehen werden muss, um die beiden Klemmkeile 34, 36 innerhalb der Aufnahme 38 in Fahrzeuglängsrichtung (x-Richtung) zu verspannen. Dabei ergibt sich zudem der Vorteil, dass die beiden Klemmkeile 34, 36, das Federelement 52 und gegebenenfalls auch die Reibfolie 48 zwischen dem konsolennahen Klemmkeil 34 und dem Wandbereich 50 des Mantelrohrkastens 18 zu einer vormontierten Baueinheit zusammengefasst werden können. Hierdurch ergibt sich ein deutlich einfacherer Einbau der Klemmeinrichtung 30 an der Konsole 10.

Ansonsten gewährleistet die Klemmeinrichtung 30 eine steife Fixierung des Mantelrohrs 20 bzw. der Lenksäule 22 in Fahrzeuglängsrichtung, da die Klemmeinrichtung 24 äußerst stabil innerhalb der Aufnahme 38 in Fahrzeuglängsrichtung (x-Richtung) fixiert ist. Hingegen ergibt sich eine äußerst günstige Klemmung der Lenksäule 22 bzw. des Mantelrohrs 20, da das Stützblech 54 in Querrichtung (y-Richtung) entsprechend nachgiebiger gestaltet ist.

## Patentansprüche

1. Lenksäulenanordnung für einen Kraftwagen, insbesondere einen Personenkraftwagen, mit einer Konsole (10)und mit einer unter Vermittlung eines Zwischenteils, insbesondere eines Mantelrohrkastens (18), zwischen jeweiligen Konsolenschenkeln (14, 16) gelagerten Lenksäule (22), die an der Konsole (10) mittels einer Klemmeinrichtung (30) lösbar festgelegt ist, welche wenigstens ein mittels eines Stützelements (54) an der Konsole (10) gehaltenes Keilpaar (32) mit jeweiligen Klemmkeilen (34, 36) umfasst,
**dadurch gekennzeichnet, dass**
die Klemmkeile (34, 36) unmittelbar aneinander anliegen und das Keilpaar (32) auf seiner dem Zwischenteil, insbesondere dem Mantelrohrkasten (18), abgewandten Seite mittels des Stützelements (54) abgestützt ist.

2. Lenksäulenanordnung nach Anspruch 1,
**dadurch gekennzeichnet, dass**
wenigstens ein Federelement (52) vorgesehen ist, welches mit einem Ende am einen Klemmkeil (34) und mit dem anderen Ende am anderen Klemmkeil (36) abgestützt ist und mittels welchem das Keilpaar (32) in einer Aufnahme (38) des zugeordneten Konsolenschenkels (14) fixiert ist.

3. Lenksäulenanordnung nach Anspruch 1 oder 2,
**dadurch gekennzeichnet, dass**
zwischen dem konsolennahen Klemmkeil (34) und dem Zwischenteil, insbesondere dem Mantelrohrkasten (18) ein reibungserhöhendes Mittel, insbesondere eine Reibfolie (48), vorgesehen ist.

4. Lenksäulenanordnung nach Anspruch 3,
**dadurch gekennzeichnet, dass**
die beiden Klemmkeile (34, 36), die Reibfolie (48) und das Federelement (52) zu einer vormontierbaren Baueinheit zusammengefasst sind.

5. Lenksäulenanordnung nach Anspruch 3,
**dadurch gekennzeichnet, dass**
die beiden Klemmkeile (34, 36) mittels des Federelements (52) in Fahrzeuglängsrichtung vorgespannt sind.

6. Lenksäulenanordnung nach einem der vorhergehenden Ansprüche,
**dadurch gekennzeichnet, dass**
das Stützelement (54) eine zumindest im Wesentlichen ebene Erstreckung aufweist.

7. Lenksäulenanordnung nach Anspruch 6,
**dadurch gekennzeichnet, dass**
das Stützelement (54) als Stützblech ausgebildet ist.

8. Lenksäulenanordnung nach einem der vorhergehenden Ansprüche,
**dadurch gekennzeichnet, dass**
die beiden Klemmkeile (34, 36) formidentisch ausgebildet sind.

## Claims

1. Steering column assembly for a motor vehicle, in particular a passenger vehicle, having a bracket (10) and a steering column (22), which is mounted between respective bracket legs (14, 16) with an intermediate part, in particular an outer tube casing (18), being interposed, wherein the steering column (22) is detachably secured to the bracket (10) by means of a clamping device (30), which comprises at least one pair of wedges (32), with respective clamping wedges (34, 36), held by means of a support element (54) on the bracket (10),
**characterised in that**
the clamping wedges (34, 36) lie directly one against the other and the pair of wedges (32) is supported on its side facing away from the intermediate part, in particular the outer tube casing (18), by means of the support element (54).

2. Steering column assembly according to claim 1,
**characterised in that**
at least one spring element (52) is provided, which with one end rests against one clamping wedge (34) and with the other end rests against the other clamping wedge (36), and by means of which the pair of wedges (32) is fixed in a recess (38) of the assigned bracket leg (14).

3. Steering column assembly according to claim 1 or 2,
**characterised in that**
a friction-increasing means, in particular a friction film (48), is provided between the clamping wedge (34) close to the bracket and the intermediate part, in particular the outer tube casing (18).

4. Steering column assembly according to claim 3,
**characterised in that**
the two clamping wedges (34, 36), the friction film (48) and the spring element (52) are put together to form a pre-mountable unit.

5. Steering column assembly according to claim 3,
**characterised in that**
the two clamping wedges (34, 36) are preloaded by means of the spring element (52) in the vehicle longitudinal direction.

6. Steering column assembly according to one of the preceding claims, **characterised in that**
the support element (54) has an at least substantially planar extension.

7. Steering column assembly according to claim 6,
**characterised in that**
the support element (54) is formed as a supporting panel.

8. Steering column assembly according to one of the preceding claims, **characterised in that**
the two clamping wedges (34, 36) are designed to be identical in shape.

## Revendications

1. Système de colonne de direction pour un véhicule automobile, en particulier pour un véhicule de tourisme, comprenant une console (10) et une colonne de direction (22) disposée entre des pattes de console respectives (14, 16) par l'intermédiaire d'un élément intermédiaire, en particulier un boîtier (18) de manchon extérieur, laquelle est fixée amovible sur la console (10) au moyen d'un dispositif de serrage (30) qui comprend au moins une paire de clavettes (32) dotée de clavettes de serrage respectives (34, 36) retenue sur la console (10) au moyen d'un élément de soutien (54), **caractérisé en ce que** les clavettes de serrage (34, 36) sont directement adjacentes les unes aux autres et la paire de clavettes (32) s'appuie sur son côté opposé à l'élément intermédiaire, en particulier le boîtier (18) de manchon extérieur au moyen de l'élément de support (54).

2. Système de colonne de direction selon la revendication 1, **caractérisé en ce qu'**il est prévu au moins un élément de ressort (52) qui s'appuie par une extrémité sur une clavette de serrage (34) et par l'autre extrémité sur l'autre clavette de serrage (36) et au moyen duquel est fixé la paire de clavettes (32) dans un logement (38) de la patte de console associée (14).

3. Système de colonne de direction selon la revendication 1 ou la revendication 2, **caractérisé en ce qu'**entre la clavette de serrage (34) proche de la console et l'élément intermédiaire, en particulier le boîtier (18) de manchon extérieur est disposé un moyen augmentant la friction, en particulier un film de friction (48).

4. Système de colonne de direction selon la revendication 3, **caractérisé en ce que** les clavettes de serrage (34, 36), le film de friction (48) et l'élément de ressort (52) sont réunis dans une unité modulaire pouvant être pré-assemblée.

5. Système de colonne de direction selon la revendication 3, **caractérisé en ce que** les deux clavettes de serrage (34, 36) sont précontraintes au moyen de l'élément de ressort (52) dans la direction longitudinale de véhicule.

6. Système de colonne de direction selon l'une quelconque des revendications précédentes, **caractérisé en ce que** l'élément de support (54) présente une étendue au moins sensiblement plate.

7. Système de colonne de direction selon la revendication 6, **caractérisé en ce que** l'élément de support (54) est conçu comme une barrette d'appui.

8. Système de colonne de direction selon l'une quelconque des revendications précédentes, **caractérisé en ce que** les deux clavettes de serrage (34, 36) présentent des formes identiques.
